# EUROPÄISCHE PATENTANMELDUNG

(11) **EP 1 118 532 A1**
(43) Veröffentlichungstag der Anmeldung: **25.07.2001**
(21) Anmeldenummer: 00101056.0
(22) Anmeldetag: 20.01.2000
(51) Int. Cl.: B62J 1/02

(54) **Anordnung zum Befestigen von Sätteln, Sitzen od. dgl. auf Fahrzeugrahmen von Einspurfahrzeugen**

(71) Anmelder: Ermer, Josef, 38626 Buzanada-Tenerife (ES)
(72) Erfinder: Ermer, Josef, 38626 Buzanada-Tenerife (ES)
(74) Vertreter: Göbel, Matthias, Dipl.-Ing.

(57) **Zusammenfassung**

Bei einer Anordnung zum Befestigen von Sätteln, Sitzen od.dgl. auf dem Fahrzeugrahmen von durch Muskel- oder Motorkraft getriebenen Einspurfahrzeugen, insbesondere Fahrrädern, ist zur Verbesserung der Federungseigenschaften und zu relativen Stellungsänderungen des Sattels auf dem Fahrzeugrahmen vorgesehen, daß der Sattel ein am Fahrzeugrahmen (3) fixierbar, senkrecht zur Längsachse des Fahrzeugs durch das Fahrergewicht abbiegbares bzw. ein rahmenfest mit Abstand zugeordnetes Federglied aufweist und daß der Sattel vermittels des Federgliedes oder gemeinsam mit dem Federglied in Längsrichtung des Fahrzeugs auf dem Fahrzeugrahmen (3) verstell- und feststellbar ausgebildet ist.

## Beschreibung

Die Erfindung betrifft eine Anordnung zum Befestigen von Sätteln, Sitzen od.dgl. auf Fahrzeugrahmen von durch Muskel- oder Motorkraft getriebenen Einspurfahrzeugen, insbesondere Fahrrädern.

Bei Fahrradsätteln ist es bekannt, den Sattelkörper durch am rückwärtigen Ende desselben angreifende Schraubenfedern zur Eleminierung von Fahrbahnstößen auf sattelfeste Trägerleisten zu stützen Der so erzielbare kurze Hub der Schraubenfedern ergibt dabei als Nachteil nur geringe Federungseigenschaften des Sattels. Außerdem lassen die Trägerleisten nur in arbeitsaufwendiger Weise Einstellungen des Sattels in Längsrichtung des Fahrrades zu.

Die Erfindung hat die Schaffung von Maßnahmen zu verbesserten Federungseigenschaften und zu einfachen relativen Stellungsänderungen des Sattels in Längsrichtung des Fahrzeugrahmens zur Aufgabe.

Erfindungsgemäß ist diese Aufgabe dadurch gelöst, daß der Sattel ein am Fahrzeugrahmen fixierbares, senkrecht zur Längsachse des Fahrzeugs durch das Fahrergewicht abbiegbares bzw. rahmenfest mit Abstand zugeordnetes Federglied aufweist und daß der Sattel vermittels des Federgliedes oder gemeinsam mit dem Federglied in Längsrichtung des Fahrzeuges auf dem Fahrzeugrahmen verstell- und feststellbar ausgebildet ist. Bevorzugt kann das Federglied durch einen Streifenteil od.dgl. aus einem federnd elastischen Werkstoff, insbesondere einem metallischen Werkstoff gebildet und mindestens über eine Teillänge am Sattel in der Vertikalen abbiegbar ausgebildet sein, wobei der Sattel durch eine, z.B. in eine Kulissennut des Streifenteils in Längsrichtung des Fahrzeugs einstellbar fest eingreifende Rohrschelle am Fahrzeugrahmen festlegbar ist. Durch Stellbewegungen des Sattels gegenüber der Rohrschelle sind mehr oder weniger Abbiegungen des Streifenteils und somit entsprechend große Federungswege des Sattels erzielbar. Es versteht sich, daß durch Verlagerung der Angriffsstelle der Rohrschelle zum vorderen Endes des Streifenteils hin zunehmend größere Abbiegungen des übrigen Teils des Streifenteils mit gleichzeitiger Verringerung der Stützkraft erzielbar sind, wodurch hinsichtlich der Federung Anpassungen des Sattels an das Körpergewicht verschiedener Benutzer vorgenommen werden können. Es versteht sich, daß der Sattel auch durch einen in einer Kulissennut des Streifenteils eingreifenden, in Längsrichtung des Fahrzeugs einstellbar fest geführten Gewindestift od.dgl. am Fahrzeugrahmen gehalten sein kann. Der im wesentlichen mit der Länge des Sattels ausgeführte Streifenteil ist bevorzugt einstückig mit dem Sattelkörper ausgebildet bzw. mit diesen integriert, wodurch der so gebildete Sattel einfach zu fertigen und zu handhaben ist.

In Ausgestaltung der Anordnung ist vorgesehen, daß bei Anordnung eines Streifenteils od.dgl. aus einem federnd elastischem Werkstoff als Federglied, der Streifenteil durch Klemmittel mit dem Fahrzeugrahmen und mit dem Sattelkörper verbunden ist und daß der Streifenteil zu Federungsvorgängen in der Vertikalen abbiegbar im Abstand den Sattelkörper untergreift.

Schließlich ist noch vorgesehen, als Federglied einen Drahtformkörper als Träger des Sattelkörpers zum Einsatz zu bringen. Bei Verwendung eines solchen Federgliedes besteht die Möglichkeit Drähte verschiedener Durchmessergrößen in Anwendung zu bringen, die mit wahlweisen unterschiedlichen vertikalen Abständen den Sattelkörper stützen und variierbar machen. Weitere Variationsmöglichkeiten der Abbiegungen des Federgliedes und damit unterchiedliche Federungseigenschaften sind dann erreichbar, wenn die Drahtformkörper Verdrehungs- oder Verbiegungsfederabschnitte aufweisen.

In weiterer Ausbildung der Anordnung kann der Sattel durch eine mit einem rohrschellenfesten Gewindestift oder unmittelbar mit einem Gewindestift mit dem Fahrzeugrahmen verbunden und mittels der Gewindestifte gegenüber dem Fahrzeugrahmen in einfacher Weise höhenverstellbar sein.

Fernerhin ist vorgesehen, den als Federglied dienenden Streifenteil mit quer zu beiden Längsseiten sich erstrekkende Abbiegungen od.dgl. zu versehen, die als Stützkörper gegen seitliches Abkippen des Sattels den Fahrzeugrahmen zu beiden Seiten kontaktieren. Es besteht auch die Möglichkeit anstelle von Abbiegungen od.dgl. einen Stift am Streifenteil fest anzuordnen, der den Streifenteil mit einer Teillänge nach unten überragt und durch Eintauchen in eine Ausnehmung des Fahrzeugrahmens oder in, z.B. fahrzeugrahmenfeste Ösen, seitliche Abkippungen des Sattels ausschließt.

In Fortbildung der Anordnung kann der Streifenteil auch aus einem starren Werkstoff gebildet und durch ein zwischen Streifenteil und Fahrzeugrahmen eingespanntes Federelement, z.B. eine Schraubenfeder oder ein Federkissen nachgebend elastisch abstützbar sein. Auch bei dieser Ausführungsform ist die Größe der Federungseffekte von der Lage der Angriffstelle der Befestigung des Streifenteils am Fahrzeugrahmen zusätzlich mitbestimmbar.

Das Wesentliche der Anordnung ist der durch die Biegespannungen des Federgliedes herbeiführbare Federungseffekt für den Sattel und die resultierende Längsverstellung von Sattel und Federglied auf dem Fahrzeugrahmen.

Die Erfindung ist anhand von Ausführungsbeispielen in den Figuren verdeutlicht. Es zeigen:
- Fig. 1: einen Sattel mit integriertem Streifenteil als Federglied für den Sattelkörper, teilweise im Schnitt,
- Fig. 2: einen Sattel gemäß Fig. 1, in Draufsicht,
- Fig. 3: einen Sattel mit integriertem Streifenteil gemäß einer abgewandelten Ausführung in Seitenansicht,
- Fig. 4: einen Sattel der Fig. 3 in Draufsicht.
- Fig. 5: einen Sattel entsprechend einer anderen Ausführungsform in Seitenansicht,
- Fig. 6: einen Sattel gemäß einer weiteren Ausführung in Seitenansicht,
- Fig. 7: einen Sattel gemäß Fig. 6 entsprechend einer weiteren Ausführung in Seitenansicht,
- Fig. 8: einen Sattel gemäß Fig. 1 mit abgewandelter Abstützung für das Federglied des Sattelkörpers,
- Fig. 9: einen Sattel gemäß Fig. 1 mit einem als Federglied für den Sattelkörper dienenden Drahtformteil und
- Fig. 10: einen Sattel anderer Ausführung mit einem durch einen Drahtformteil gebildeten Federglied für den Sattelkörper in Seitenansicht.

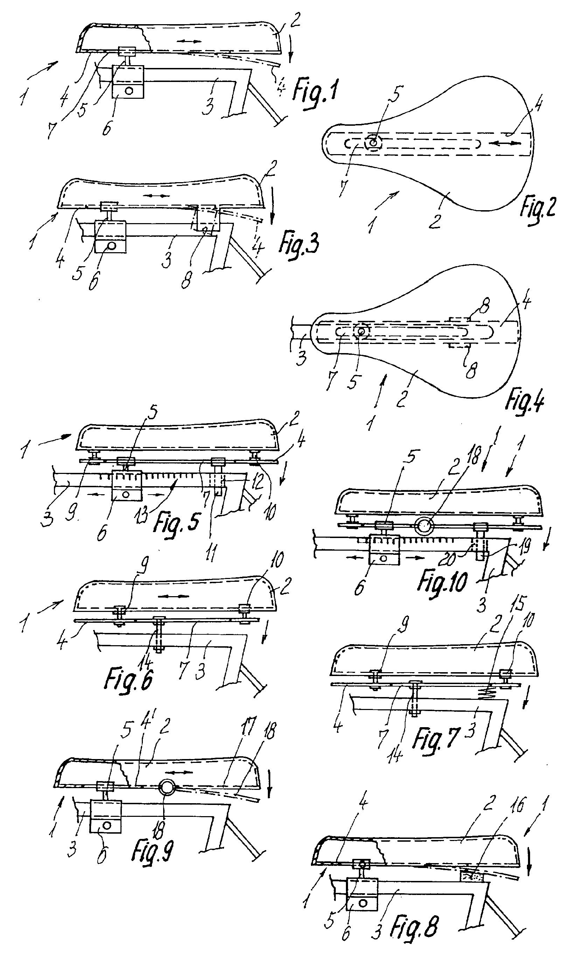

Der in den Fig. 1 und 2 gezeigte Fahrradsattel 1 weist einen Sattelkörper 2 auf, der an seinem dem Fahrzeugrahmen 3 zugewandten Ende ein durch einen Streifenteil 4 gebildetes Federglied aufnimmt. Das Federglied ist im Sattelkörper 2 fixiert und durch eine einen Gewindestift 5 aufweisende Klemmschelle 6 mit dem Fahrzeugrahmen 3 fest verbunden. Der Streifenteil 4 weist eine Kulissennut 7 auf, die durch den klemmschellenfesten Gewindestift 5 durchgriffen ist und unterschiedliche Positionen des Sattels am Fahrzeugrahmen 3 einzustellen erlaubt. In der in den Fig. 1 und 2 gezeigten Stellungen der Gewindestifte 5 nahe des vorderen Endes des Streifenteils 4 sind große Abbiegungen des rückwärtigen Endes des Streifenteils 4 durch das Gewicht des Benutzers des Sattels erzielbar, die weiche nachgiebige Federungen ergeben.

In den Fig. 3 und 4 ist der Sattelkörper 2 wiederum mit einem als Federglied dienenden Streifenteil 4 ausgestattet und durch eine Klemmschelle 6 mit Gewindestift 5 am Fahrzeugrahmen 3 festgelegt. Zusätzlich ist der Streifenteil 4 mit angeschnittenen Laschen 8 versehen, die sich nach unten erstrecken und den Fahrzeugrahmen 3 beidseitig übergreifen um seitliche Abkippungen des Sattels 1 gegenüber dem Fahrzeugrahmen 3 auszuschließen. Bei dieser Ausführungsform der Anordnung ist durch Längsbewegen von Klemmschelle 6 und Gewindestift 5 gegenüber der Kulissennut 7 die Federungseigenschaft des Sattelkörpers 2 veränderbar.

Beim Ausführungsbeispiel der Fig. 5 ist der Sattelkörper 2 an einem unterhalb im Abstand des Sattelkörpers 2 als Federglied angeordneten Streifenteil 4 durch Klemmittel, z.B. Schrauben 9 und 10 festgelegt. Der Streifenteil 4 weist wiederum eine Kulissennut 7 auf, in die der Gewindestift 5 einer auf dem Fahrzeugrahmen 3 verschieblich ein- und feststellbaren Klemmschelle 6 führbar und fixierbar ist. Zur Vermeidung von unerwünschten seitlichen Kippbewegungen des Sattelkörpers 2 auf dem Fahrzeugrahmen 3 greift ein streifenteilfester Stift 11 in eine Ausnehmung 12 des Fahrzeugrahmens 3 ein. Verschiebungen des Sattelkörpers 2 sind nach Lösen der Gewindestifte 5, 7 und/oder der Klemmschelle 6 möglich und Abfederungen mit verschieden großen Härten und Weglängen erzielbar. Eine Skala 13 am Fahrzeugrahmen 3 kennzeichnet optisch die Stellung der Klemmschelle 6 auf dem Fahrzeugrahmen 3.

Beim Sattel der Fig. 6 ist der Streifenteil 4 mittels eines Gewindestiftes 14 am Fahrzeugrahmen 3 festgelegt und durch Klemmittel 9 und 10 mit dem Sattelkörper 2 verbunden, wobei der Gewindestift 14 und der Streifenteil 4 relativ zueinander über die Kulissennut 7 zu Änderungen der Federungseigenschaft des Sattels 1 einstellbar sind.

Beim Ausführungsbeispiel der Fig. 7 ist der Sattelkörper 2 entsprechend der Fig. 6 durch die beiden Klemmittel 9, 10 mit dem Streifenteil 4 verbunden und durch einen Gewindebolzen 14 am Fahrzeugrahmen 3 festgelegt. Der Streifenteil 4 ist am rückwärtigen Ende zusätzlich durch eine Schraubenfeder 15 unterstützt. Durch entsprechende Ausgestaltung der Schraubenfeder 15 besteht die Möglichkeit, die Federungseigenschaft des Streifenteils 4 beliebig zu ändern.

Anstelle einer Schraubenfeder 15 ist bei der Ausführung des Sattels der Fig. 8 ein Federkissen 16 zur zusätzlichen Stützung des Streifenteils 4 vorgesehen. Das Federkissen kann, z.B. durch einen aufgeschäumten Kunststoff gebildet sein und ist zwischen dem Streifenteil 4 und dem Fahrzeugrahmen 3 eingeklemmt bzw. durch Adhäsion oder vermittels mechanischer Mittel festgelegt.

In der Fig. 9 ist der Sattelkörper 2 durch einen als Federglied dienenden Drahtformteil 17 mit einer Rohrschelle 6 und Gewindestift 5 verbunden. Der Drahtformteil 17 weist einen Verdrehungsfederabschnitt 18 auf um den weitgehend die Auslenkung des Drahtformteils 17 erfolgt.

Der Sattel der Fig. 10 ist entsprechend mit einem Drahtformteil 17 als Federglied und zusätzlich mit einem Führungsstift 19 versehen, der durch Eintauchen in eine Ausnehmung 20 des Fahrzeugrahmens 3 Abkippbewegungen des Sattelkörpers verhindert.

## Patentansprüche

1. Anordnung zum Befestigen von Sätteln, Sitzen od.dgl. auf dem Fahrzeugrahmen von durch Muskel- oder Motorkraft getriebenen Einspurfahrzeugen, insbesondere Fahrrädern, dadurch gekennzeichnet, daß der Sattel ein am Fahrzeugrahmen (3) fixierbar, senkrecht zur Längsachse des Fahrzeugs durch das Fahrergewicht abbiegbares bzw. ein rahmenfest mit Abstand zugeordnetes Federglied aufweist und daß der Sattel vermittels des Federgliedes oder gemeinsam mit dem Federglied in Längsrichtung des Fahrzeugs auf dem Fahrzeugrahmen (3) verstell- und feststellbar ausgebildet ist.

2. Anordnung nach Anspruch 1, dadurch gekennzeichnet, daß das Federglied durch einen Streifenteil (4) od.dgl. aus einem federnd elastischen Werkstoff, z.B. einem metallischen Werkstoff gebildet ist und daß der Streifenteil (4) mindestens über eine Teillänge am Sattelkörper (2) in der Vertikalen abbiegbar ausgebildet ist.

3. Anordnung nach Anspruch 1 und 2, dadurch gekennzeichnet, daß das Federglied durch einen Streifenteil (4) od.dgl. aus einem federnd elastischen Werkstoff, z.B. einem metallischen Werkstoff gebildet ist, der Streifenteil (4) durch Klemmittel (9,10) mit dem Fahrzeugrahmen (3) und dem Sattelkörper (2) verbunden ist und daß der Streifenteil (4) in der Vertikalen über eine Teillänge abbiegbar im Abstand den Sattelkörper (2) untergreift.

4. Anordnung nach Anspruch 1, dadurch gekennzeichnet, daß das Federglied durch einen Drahtformteil (17) gebildet ist.

5. Anordnung nach einem der vorhergehenden Ansprüche 1 bis 4, dadurch gekennzeichnet, daß der Sattel durch eine in eine Kulissennut (7) des Streifenteils (4) in Längsrichtung des Fahrzeugrahmens (3) einstellbar fest eingreifende Rohrschelle (6) am Fahrzeugrahmen (3) festlegbar ist.

6. Anordnung nach einem der vorhergehenden Ansprüche 1 bis 4, dadurch gekennzeichnet, daß der Sattel durch einen in einer Kulissennut (7) des Streifenteils (4) in Längsrichtung des Fahrzeugrahmens (3) einstellbar fest geführten Gewindestift (14) od.dgl. am Fahrzeugrahmen festlegbar ist.

7. Anordnung nach Anspruch 5 und 6, dadurch gekennzeichnet, daß der Sattel durch die mit einem rohrschellenfesten Gewindestift (5) versehene Rohrschelle (6) oder unmittelbar mit einem Gewindestift (14) verbunden ist und daß mittels der Gewindestifte Höhenverstellungen des Sattels gegenüber dem Fahrzeugrahmen (3) durchführbar sind.

8. Anordnung nach Anspruch 1 und 3, dadurch gekennzeichnet, daß der als Federglied dienende Streifenteil (4) quer zu beiden Längsseiten sich erstreckende Abbiegungen (8) aufweist, die als Stützkörper gegen seitliches Abkippen des Sattels den Fahrzeugrahmen (3) kontaktieren.

9. Anordnung nach Anspruch 1, dadurch gekennzeichnet, daß der Streifenteil (4) in der Abbiegeebene mindestens einen Stift (11) od.dgl. fest aufweist, der den Streifenteil (4) mit einer Teillänge unten überragt und daß der Stift (11) durch Eintauchen in eine Ausnehmung (12) des Fahrzeugrahmens (3) oder fahrzeugrahmenfeste Ösen, seitliche Abkippungen des Sattels verhindert.

10. Anordnung nach Anspruch 1, dadurch gekennzeichnet, daß der Streifenteil (4) aus einem starren Werkstoff gebildet, mit dem Sattelkörper (2) gelenkig verbunden ist und daß durch ein zwischen Streifenteil (4) und Fahrzeugrahmen (3) eingespanntes Federelement (15), z.B. Schraubenfeder, Federkissen od.dgl. abschwenkbar gestützt ist.

11. Anordnung nach Anspruch 1, dadurch gekennzeichnet, daß der Sattel mit zwei im Abstand ausgebildete Befestigungsstellen (9,10) am Federglied angreift und daß zwischen den Befestigungsstellen im Bereich einer Kulissennut (7) verschiebbar eine fahrzeugrahmenfeste Rohrschelle (6) bzw. ein Stift (14) od.dgl. angreift.
